# EUROPÄISCHE PATENTSCHRIFT

(11) **EP 2 445 680 B1**
(45) Veröffentlichungstag und Bekanntmachung des Hinweises auf die Patenterteilung: **12.08.2015**
(21) Anmeldenummer: 10723588.9
(22) Anmeldetag: 07.06.2010
(51) Int. Cl.: B23K 20/12, F01D 5/02, F01D 5/06

(54) **TURBINENLÄUFER FÜR EINEN TURBOLADER, TURBOLADER UND VERFAHREN ZUR HERSTELLUNG EINES TURBINENLÄUFERS**
TURBINE ROTOR FOR A TURBOCHARGER, TURBOCHARGER AND METHOD FOR PRODUCING A TURBINE ROTOR
ROTOR DE TURBINE POUR UNE TURBOSOUFFLANTE, TURBOSOUFFLANTE ET PROCÉDÉ POUR FABRIQUER UN ROTOR DE TURBINE

(30) Priorität: 23.06.2009 DE 102009030042
(43) Veröffentlichungstag der Anmeldung: 02.05.2012
(73) Patentinhaber: Continental Automotive GmbH, 30165 Hannover (DE)
(72) Erfinder: ALBUZAT, Ulrike, 68309 Mannheim (DE); FERLING, Bruno, 67259 Beindersheim (DE); MÜNCH, Günter, 67316 Carlsberg (DE)
(86) Internationale Anmeldenummer: PCT/EP2010/057906
(87) Internationale Veröffentlichungsnummer: WO 2010/149480

(56) Entgegenhaltungen:
- FR-A1- 2 864 157
- JP-A- 2 157 403
- JP-A- 61 046 384
- US-A- 3 421 201

## Beschreibung

Die vorliegende Erfindung bezieht sich auf einen Turbinenläufer für einen Turbolader. Die vorliegende Erfindung bezieht sich ferner auf einen Turbolader und auf ein Verfahren zur Herstellung eines Turbinenläufers.

Die DE 10 2007 018 618 A1 beschreibt den allgemein bekannten Aufbau eines Turboladers zur Leistungssteigerung eines Verbrennungsmotors eines Kraftfahrzeugs, der im Wesentlichen aus einer Radialturbine mit einem Turbinenrad, welches vom Abgasstrom des Verbrennungsmotors angetrieben wird, und einem im Ansaugtrakt des Verbrennungsmotors angeordneten Radialverdichter mit einem Verdichterrad, das durch eine Läuferwelle drehfest mit dem Turbinenrad verbunden ist, besteht. Das Turbinenrad ist meist durch einen Stoffschluss und das Verdichterrad ist meist durch einen Formschluss mit der Läuferwelle verbunden. Die Baugruppe Läuferwelle und Turbinenrad wird nachfolgend als Turbinenläufer des Abgasturboladers bezeichnet.

Durch meist sehr unterschiedliche Anforderungen an solche Turbinenräder einerseits, welche aufgrund der heißen Abgase des Verbrennungsmotors zum Teil sehr hohe Temperaturen und aufgrund der im Betrieb des Turboladers auftretenden, sehr hohen Drehzahlen von bis zu 300.000 U/min hohen Fliehkräften ausgesetzt sind, und an Läuferwellen andererseits, welche als Teil des Lagerungssystems des Turboladers eine hohe Wechselbiegelast aufnehmen müssen, sind die jeweiligen Werkstoffe, aus denen diese Bauteile gefertigt sind, typischerweise sehr unterschiedlich.

Aufgrund der im Betrieb eines Turboladers auftretenden hohen mechanischen Belastungen auf den Turbinenläufer hat sich bei modernen Turboladern im Kraftfahrzeugbereich das Schweißen als Verbindungstechnik zur Verbindung des Turbinenrades und der Läuferwelle als das Verfahren der Wahl durchgesetzt. Aufgrund der eben genannten unterschiedlichen Werkstoffe für das Turbinenrad und die Läuferwelle findet als Schweißverfahren zur Verbindung dieser Bauteile vor allem das Rotationsreibschweißverfahren Anwendung.

Sowohl die US 3,421,201 A und die DE 697 18 713 T2 als auch die WO 2008/046556 A2 und die EP 1 002 935 A1 beschreiben Verfahren zum Rotationsreibschweißverbinden einer Läuferwelle mit einem Turbinenrad. Beim Rotationsreibschweißen wird entweder die Läuferwelle oder das Turbinenrad auf eine bestimmte Drehzahl gebracht und dann an das stehende Bauteil angedrückt. Dadurch entsteht Reibungswärme und die Materialien verschweißen miteinander. Durch das Andrücken des sich drehenden Bauteils an das stehende Bauteil wird aber auch Material des weicheren Schweißpartners im teigigen Zustand zur Seite weggedrückt. Zur Außenfläche der Läuferwelle hin stellt dies kein Problem dar, da dem weggedrückten Material genügend Raum zur Verfügung steht. Dieses nach außen gedrückte Material kann in einem, dem Rotationsreibschweißvorgang nachfolgenden Arbeitsschritt leicht mittels eines Spanverfahrens entfernt werden.

In Richtung der Drehachse der Läuferwelle muss dem wegfließenden Material aber ein Hohlraum zur Verfügung gestellt werden, damit es nicht zu einem Materialaufstau und damit zu einer unzureichenden Festigkeit der Schweißverbindung kommt.

Dieser Hohlraum ist, wie zum Beispiel in der JP 580 50 189 A offenbart, in beiden Schweißpartnern vorgesehen, was beim Turbinenrad dazu führt, dass die Festigkeit des Turbinenradrückens durch die vorgesehene Aussparung herabgesetzt werden kann. Dadurch kann es zu einem Materialbruch im Turbinenrad bis hin zur Zerstörung des Turboladers kommen.

Weiterhin muss das Turbinenrad von der Seite der Verdichterbeschaufelung an die Turbinenradnabe angegossen werden, da der Hohlraum dann mitgegossen werden kann und somit kein zeit- und kostenaufwändiges spanendes Herstellen des Hohlraums erforderlich ist. Dies führt allerdings zu einer strömungsungünstigen Form der Turbinenradnabe, da die Nabe mit einem großen Querschnitt versehen werden muss, damit das Gussmaterial nicht frühzeitig erstarrt.

Die Positionierung des Angusses an der Turbinenradnabe führt sehr häufig - ohne weitere Maßnahmen - zu einer deutlich schlechteren Ausbildung des Werkstoffgefüges im Bereich der Turbinenradnabe und der Turbinenradbeschaufelung.

Die eben genannten Nachteile, welche insgesamt einen nicht optimalen Turbinenläufer zur Folge haben, gilt es selbstverständlich zu vermeiden.

Vor diesem Hintergrund liegt der vorliegenden Erfindung die Aufgabe zugrunde, einen verbesserten Turbinenläufer vorzuschlagen.

Diese Aufgabe wird erfindungsgemäß durch einen Turbinenläufer mit den Merkmalen des Patentanspruchs 1 und/oder durch einen Turbolader mit den Merkmalen des Patentanspruchs 7 und/oder durch ein Verfahren mit den Merkmalen des Patentanspruchs 8 gelöst.

Demgemäß ist vorgesehen:
Ein Turbinenläufer für einen Turbolader, insbesondere für ein Kraftfahrzeug, mit einer einstückig ausgebildeten Läuferwelle, und mit einem einstückig ausgebildeten Turbinenrad, welches eine Turbinenbeschaufelung und einen massiv ausgebildeten Turbinenradabsatz aufweist, wobei die Turbinenbeschaufelung und der Turbinenradabsatz auf entgegen gesetzten Stirnflächen des Turbinenrades angeordnet sind, und wobei eine erste Stirnfläche des Turbinenradabsatzes mit einer zweiten Stirnfläche der Läuferwelle durch Rotationsreibverschweißen stoffschlüssig verbunden ist. Dabei ist der massive Turbinenradabsatz ohne Hohlräume oder Vertiefungen ausgebildet und die zweite Stirnfläche der Läuferwelle weist eine koaxial zur Drehachse angeordnete Vertiefung auf, die zur Aufnahme von plastifiziertem Material des Turbinenradabsatzes und/oder der Läuferwelle dient.

Ein Turbolader für ein Kraftfahrzeug, mit einem erfindungsgemäßen Turbinenläufer, wobei der Turbolader ein Turbinengehäuse, das Turbinenrad, welches in dem Turbinengehäuse angeordnet ist, ein Verdichtergehäuse, ein in dem Verdichtergehäuse angeordnetes Verdichterrad und die Läuferwelle, welche das Turbinenrad mit dem Verdichterrad drehfest verbindet, aufweist. Hierdurch ist es möglich, den erfindungsgemäßen Turbinenläufer mit den zuvor beschriebenen Vorteilen in einem Turbolader vorzugsweise bei einem Kraftfahrzeug einzusetzen. Ein Verfahren zur Herstellung eines erfindungsgemäßen Turbinenläufers, mit den nacheinander erfolgenden Schritten: Koaxiales Einspannen der Läuferwelle und des Turbinenrades in eine Rotationsreibschweißvorrichtung; Rotieren der Läuferwelle; Aufpressen der zweiten Stirnfläche der Läuferwelle auf die erste Stirnfläche des Turbinenradabsatzes; und Miteinander Rotationsreibverschweißen der mit ihren Stirnflächen aufeinander aufgepressten Läuferwelle und Turbinenradabsatz.

Die Läuferwelle und das Turbinenrad bilden je ein einteiliges und vorzugsweise sogar ein einstückiges Bauteil. Das Turbinenrad weist eine Turbinenbeschaufelung und einen massiv ausgebildeten Turbinenradabsatz auf. Unter massivem Turbinenradabsatz wird im Folgenden verstanden, dass der Turbinenradabsatz weitgehend ohne Hohlräume oder Vertiefungen und damit als möglichst formstabiles Element ausgebildet ist. Die Turbinenbeschaufelung und der Turbinenradabsatz sind auf entgegen gesetzten Stirnflächen des Turbinenrades angeordnet. Eine erste Stirnfläche des Turbinenradabsatzes ist mit einer zweiten Stirnfläche der Läuferwelle stoffschlüssig verbunden. Die stoffschlüssige Verbindung wird erfindungsgemäß durch Rotationsreibverschweißen erzeugt. Hierbei wird die Läuferwelle in Rotation versetzt und mit einer definierten Kraft koaxial auf den Turbinenradabsatz des stehenden Turbinenrades gepresst.

Die der vorliegenden Erfindung zugrunde liegende Idee besteht vor allem darin, den Turbinenradabsatz massiv, ohne Hohlräume oder Vertiefungen auszubilden und nur in der Stirnfläche der Läuferwelle eine Vertiefung zur Aufnahme von plastifiziertem Material des Turbinenradabsatzes und/oder der Läuferwelle vorzusehen. Hierdurch wird zuverlässig verhindert, dass es zu einem Aufstau von plastifiziertem Material kommt, wodurch die Zuverlässigkeit der stoffschlüssigen Verbindung zwischen dem Turbinenrad und der Läuferwelle verringert werden würde. Dadurch ist es möglich, eine stoffschlüssige Verbindung mit hoher Zuverlässigkeit zwischen der Läuferwelle und dem Turbinenrad zur Verfügung zu stellen.

Darüber hinaus dies ist in herstellungstechnischer Sicht besonders kosteneffektiv. Im Gegensatz zu bekannten Lösungen ist es damit nicht erforderlich, eine durch ein Gussverfahren oder ein spanendes Verfahren herzustellende Vertiefung in dem Turbinenradabsatz vorzusehen. Erfindungsgemäß kann somit auch effektiv verhindert werden, dass es zu einem Materialbruch im Turbinenrad aufgrund der Kerbwirkung einer Vertiefung im Turbinenradabsatz kommt. Gleichzeitig wird eine zuverlässige stoffschlüssige Verbindung zwischen dem Turbinenrad und der Läuferwelle gewährleistet.

Vorteilhafte Ausgestaltungen und Weiterbildungen der vorliegenden Erfindung ergeben sich aus den weiteren Unteransprüchen und aus der Beschreibung in Zusammenschau mit den Figuren der Zeichnung.

In einer typischen Ausgestaltung der vorliegenden Erfindung ist der Turbinenradabsatz als ein sich aus einer der Stirnflächen des Turbinenrades erhebender, zu einer Drehachse des Turbinenrades rotationssymmetrischer Vorsprung ausgebildet. Hierdurch ist es möglich, den Turbinenradabsatz schnell und kostengünstig mittels eines spanenden Verfahrens, wie zum Beispiel Rundschleifen oder Drehen, zu bearbeiten. Hierdurch reduzieren sich die Herstellungskosten des erfindungsgemäßen Turbinenläufers.

In einer bevorzugten Ausgestaltung der vorliegenden Erfindung ist die erste Stirnfläche, die am Turbinenradabsatz vorgesehen ist, mit der zweiten Stirnfläche, die an der Läuferwelle vorgesehen ist, rotationsreibverschweißt, wobei die Läuferwelle koaxial zu dem Turbinenradabsatz ausgerichtet ist. Dadurch können unterschiedliche Materialien der Läuferwelle und des Turbinenradabsatzes schnell und zuverlässig über einen Stoffschluss verbunden werden. Hierdurch reduzieren sich die Herstellungskosten des Turbinenläufers und die Zuverlässigkeit der stoffschlüssigen Verbindung zwischen dem Turbinenrad und der Läuferwelle wird signifikant erhöht.

In einer bevorzugten Ausgestaltung der vorliegenden Erfindung ist die Vertiefung koaxial zu einer Drehachse der Läuferwelle angeordnet, wodurch die Vertiefung einfach und schnell durch Drehen herstellbar ist. Hierdurch reduzieren sich die Herstellkosten und die Herstellzeit des erfindungsgemäßen Turbinenläufers.

In einer ebenso bevorzugten Ausgestaltung der vorliegenden Erfindung ist die Läuferwelle aus einem legierten Edelstahl, insbesondere aus einem legierten Edelstahl mit den Hauptlegierungskomponenten Chrom, Molybdän und Vanadium gefertigt. Hierdurch ist es möglich, dass die Läuferwelle als Teil des Lagerungssystems eines Turboladers eine hohe Wechselbiegelast aufnehmen kann. Hierdurch erhöht sich die Lebensdauer des Turbinenläufers und damit die Lebensdauer des Turboladers.

In einer weiteren bevorzugten Ausgestaltung ist das Turbinenrad aus einer nickelbasierten Legierung, insbesondere aus einer nickelbasierten Legierung für Hochtemperaturanwendungen gefertigt. Dadurch widersteht das Turbinenrad sehr hohen Abgastemperaturen und den im Betrieb eines Turboladers auftretenden hohen Fliehkräften. Hierdurch wird die Lebensdauer und die Zuverlässigkeit des erfindungsgemäßen Turbinenläufers in vorteilhafter Weise erhöht.

In einer ebenso bevorzugten Ausgestaltung ist das Turbinenrad ein im Metallguss hergestelltes Turbinenrad, welches einen Anguss aufweist, der auf der ersten Stirnfläche angeordnet ist. Durch das Angiessen des Turbinenrades über den Turbinenradabsatz ergibt sich im Bereich der Turbinenbeschaufelung und der Turbinennabe ein verbessertes Werkstoffgefüge und die Turbinennabe kann strömungsgünstiger gestaltet werden. Hierdurch wird zum Einen die Versagungswahrscheinlichkeit der Turbinenbeschaufelung aufgrund einer schlechten Werkstoffgefügeausbildung reduziert. Zum Anderen wird durch eine strömungsgünstigere Turbinennabe der Wirkungsgrad eines Turboladers mit einem erfindungsgemäßen Turbinenläufer verbessert.

In einer bevorzugten Ausgestaltung des Verfahrens der vorliegenden Erfindung wird ein beim Rotationsreibverschweißen erzeugter ringförmiger Schweißwulst, welcher an einer Mantelfläche der Läuferwelle und an einer Mantelfläche des Turbinenradabsatzes vorhanden ist, nachträglich entfernt. Hierdurch ist es möglich, den Übergang zwischen der Läuferwelle und dem Turbinenradabsatz in die gewünschte Form, beispielsweise in die Form eines Lagersitzes zur Lagerung der Läuferwelle zu bringen.

Der Schweißwulst kann dabei durch ein spanendes Verfahren, insbesondere durch ein Rundschleifverfahren entfernt werden. Hierdurch ist es möglich, durch Verwendung einer entsprechenden Formscheibe den Übergang zwischen der Läuferwelle und dem Turbinenradsatz schnell und kostengünstig in die endgültige Form zu bringen. Hierdurch werden die Herstellungskosten und die Herstellungszeit für den erfindungsgemäßen Turbinenläufer reduziert.

Die oben genannten Ausgestaltungen und Weiterbildungen lassen sich in beliebiger Weise - sofern sinnvoll - miteinander kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Ansicht eines Ausführungsbeispiels eines erfindungsgemäßen Turbinenläufers; und
- Fig. 2a-c: eine schematische Ansicht eines Verfahrens zur Herstellung eines erfindungsgemäßen Turbinenläufers.

In den Figuren der Zeichnung sind - sofern nichts anderes ausgeführt ist - gleiche Bauteile, Elemente und Merkmale mit denselben Bezugszeichen versehen worden.

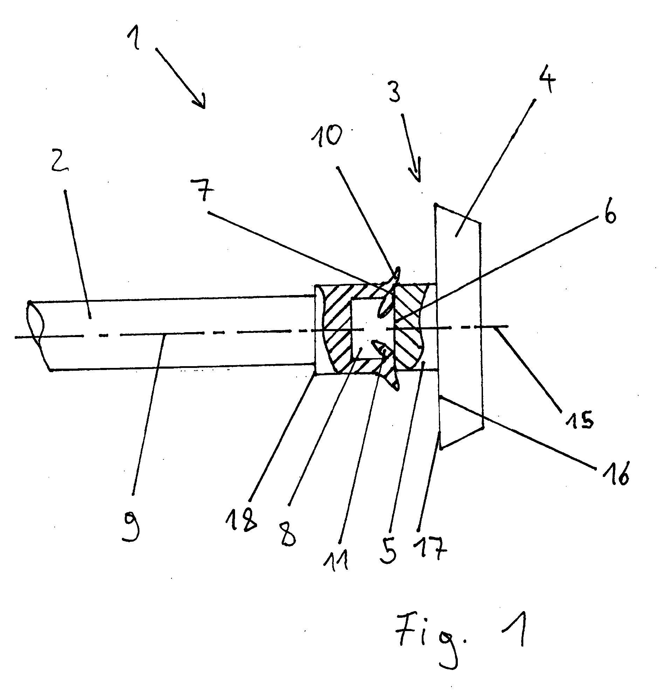

Fig. 1 zeigt eine schematische Ansicht eines Ausführungsbeispiels eines erfindungsgemäßen Turbinenläufers. Der hier mit Bezugszeichen 1 bezeichnete erfindungsgemäße Turbinenläufer weist eine bevorzugt einstückig ausgebildete Läuferwelle 2 mit einer Drehachse 9 und ein bevorzugt einstückig ausgebildetes Turbinenrad 3 mit einer Drehachse 15 auf. Unter einstückig ist im Folgenden zu verstehen, dass die entsprechenden Bauteile aus nur einem Element bestehen und durchgängig aus demselben Werkstoff gefertigt sind. Das Turbinenrad 3 weist eine Turbinenbeschaufelung 4 und einen Turbinenradabsatz 5 auf. Die Turbinenbeschaufelung 4 und der Turbinenradabsatz 5 sind auf entgegengesetzten Stirnflächen 16, 17 des Turbinenrades 3 angeordnet. Der Turbinenradabsatz 5 ist als ein sich aus der Stirnfläche 17 des Turbinenrades 3 erhebender, zu der Drehachse 15 rotationssymmetrischer Vorsprung ausgebildet.

Alternativ dazu kann der Turbinenradabsatz 5 in der Aufsicht auf die Stirnfläche 17 auch eine rechteckige oder beispielsweise vieleckige oder jede andere beliebige Form aufweisen. Der Turbinenradabsatz 5 weist weiterhin eine erste Stirnfläche 6 auf. Der Turbinenradabsatz 5 ist massiv ausgebildet, d. h. er weist keine Hohlräume oder Vertiefungen auf.

Die Läuferwelle 2 weist eine Drehachse 9 und eine zweite Stirnfläche 7 auf. Die zweite Stirnfläche 7 weist eine Vertiefung 8 auf, welche bevorzugt koaxial zu der Drehachse 9 angeordnet ist. Die Vertiefung 8 ist bevorzugt als zur Drehachse 9 koaxial ausgebildete zylinderförmige Vertiefung 8 vorgesehen. Alternativ dazu kann die Vertiefung 8 in der Aufsicht auf die zweite Stirnfläche 7 auch als rechteckförmige oder vieleckförmige Vertiefung 8 ausgebildet sein. Die Läuferwelle 2 weist bevorzugt einen Läuferwellenabsatz 18 auf, in welchem die Vertiefung 8 vorgesehen ist.

Die erste Stirnfläche 6 des Turbinenradabsatzes 5 ist mit der zweiten Stirnfläche 7 der Läuferwelle 2 stoffschlüssig durch Rotationsreibverschweißen verbunden, wobei die Läuferwelle 2 koaxial zu dem Turbinenradabsatz 5 ausgerichtet ist. Die Vertiefung 8 dient der Aufnahme eines inneren Schweißwulstes 11, welcher beim Rotationsreibverschweißen entsteht. Ein äußerer Schweißwulst 10 ist an einer Mantelfläche der Läuferwelle 2 und an einer Mantelfläche des Turbinenradabsatzes 5 vorhanden.

Das Turbinenrad 3 ist bevorzugt aus einer nickelbasierten Legierung, insbesondere aus einer nickelbasierten Legierung für Hochtemperaturanwendungen gefertigt. Bevorzugt ist das Turbinenrad 3 ein im Metallguss hergestelltes Turbinenrad 3. Das Rohteil des Turbinenrades 3 weist einen Anguss auf, welcher auf der ersten Stirnfläche 6 angeordnet ist. Hierdurch ist es möglich eine in der Fig. 1 nicht dargestellte Turbinenradnabe sehr strömungsgünstig zu gestalten. Weiterhin ergibt sich durch das Angiessen des Rohteils des Turbinenrades 3 über den Turbinenradabsatz 5 eine besonders gute Gefügeausbildung im Bereich der Turbinenbeschaufelung 4 und der Turbinennabe. Die Läuferwelle 2 ist aus einem legierten Edelstahl, insbesondere aus einem legierten Edelstahl mit den Hauptlegierungskomponenten Chrom, Molybdän und Vanadium gefertigt. Hierdurch ergibt sich eine hervorragende Biegewechselfestigkeit der Läuferwelle 2.

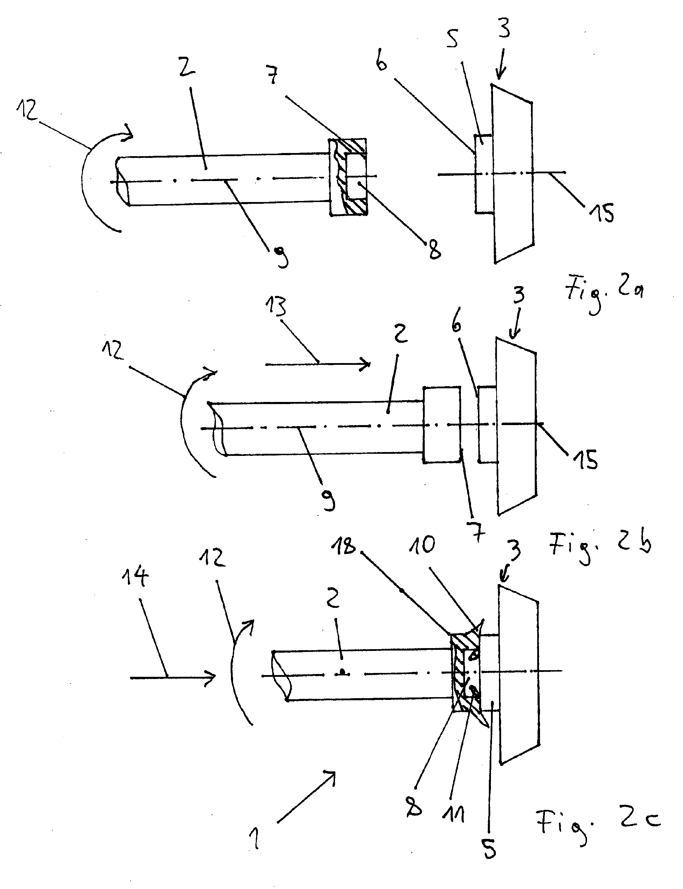

Fig. 2 zeigt eine schematische Ansicht eines Verfahrens zur Herstellung eines erfindungsgemäßen Turbinenläufers 1.

Fig. 2a zeigt zunächst das Turbinenrad 3 mit der Drehachse 15, dem Turbinenradabsatz 5 und der ersten Stirnfläche 6. Weiterhin zeigt Fig. 2a die Läuferwelle 2 mit der Drehachse 9, der zweiten Stirnfläche 7 und der Vertiefung 8.

Nachfolgend werden die Verfahrensschritte eines möglichen Verfahrens zur Herstellung eines erfindungsgemäßen Turbinenläufers 1 beschrieben:
Zunächst werden die Läuferwelle 2 und das Turbinenrad 3 koaxial in eine Rotationsreibschweißvorrichtung eingespannt. Die Rotationsreibschweißvorrichtung ist in Fig. 2 nicht dargestellt. Das Turbinenrad 3 wird dabei bevorzugt drehfest eingespannt. Die Läuferwelle 2 wird, wie in Fig. 2a gezeigt, in Rotation 12 versetzt. Alternativ dazu kann auch die Läuferwelle 2 drehfest eingespannt sein und das Turbinenrad 3 in Rotation versetzt werden oder beide Fügepartner werden in Rotation versetzt.

Wie in Fig. 2b dargestellt, wird die in Rotation 12 versetzte Läuferwelle 2 auf das Turbinenrad 3 axial in Richtung der Drehachse 9 zu bewegt. Hierbei nähern sich die erste Stirnfläche 6 und die zweite Stirnfläche 7 an.

Sobald ein Kontakt zwischen der ersten Stirnfläche 6 und der zweiten Stirnfläche 7 besteht wird, wie in Fig. 2c dargestellt, die rotierende 12 Läuferwelle 2 mit einer definierten Kraft 14 auf den Turbinenradabsatz 5 des Turbinenrades 3 aufgepresst. Die Größe der Kraft 14 und die Umfangsgeschwindigkeit der Rotation 12 ist im Wesentlichen abhängig von der Materialpaarung der zu verschweißenden Fügepartner und den Durchmessern der Läuferwelle 2 bzw. des Läuferwellenabsatzes 18 und des Turbinenradabsatzes 5. Durch das Aufpressen und Rotieren 12 entsteht Reibungswärme und die Materialien der mit ihren Stirnflächen 6, 7, aufeinandergepressten Läuferwelle 2 und Turbinenradabsatz 5 werden miteinander rotationsreibverschweißt. Durch das Aufpressen der rotierenden 12 Läuferwelle 2 auf das stehende Turbinenrad 3 wird aber auch Material der Fügepartner im teigigen Zustand zur Seite, d.h. aus dem Bereich der Schweißnaht heraus, weggedrückt. Der dadurch erzeugte ringförmige äußere Schweißwulst 10, welcher an einer Mantelfläche der Läuferwelle 2 und an einer Mantelfläche des Turbinenradabsatzes 5 vorhanden ist, wird nachträglich entfernt. Dieses Entfernen des Schweißwulstes 10 ist in der Fig. 2 nicht dargestellt. Bevorzugt wird der Schweißwulst 10 durch ein spanendes Verfahren, insbesondere durch ein Rundschleifverfahren mit Formscheiben entfernt. Durch die Anwendung einer entsprechenden Formscheibe kann der Übergang zwischen der Läuferwelle 2 und dem Turbinenradabsatz 5 schnell und kostengünstig in eine gewünschte endgültige Form gebracht werden. Bei dem Rundschleifen kann auch der an der Läuferwelle 2 vorgesehene Läuferwellenabsatz 18 auf den gewünschten Durchmesser der Läuferwelle 2 heruntergeschliffen werden. In Richtung der Drehachse 9 der Läuferwelle 2 fließendes teigiges Material wird von dem Hohlraum 8 aufgenommen. Dadurch kann es nicht zu einem Materialaufstau im Bereich der Schweißnaht und damit zu einer unzureichenden Festigkeit der rotationsreibverschweißten Verbindung der Fügepartner kommen.

Obwohl die vorliegende Erfindung anhand bevorzugter Ausführungsbeispiele vollständig beschrieben wurde, ist sie darauf nicht beschränkt, sondern auf vielfältige Art und Weise modifizierbar. Insbesondere können Merkmale der einzelnen, oben aufgeführten Ausführungsbeispiele - sofern dies technisch sinnvoll ist - beliebig miteinander kombiniert werden.

In einer bevorzugten Modifikation der vorliegenden Erfindung ist die Turbinenbeschaufelung nicht als integraler Bestandteil des Turbinenrades ausgebildet, sondern von diesem trennbar. Hierdurch ist es vorteilhafterweise möglich, die Turbinenbeschaufelung bei Beschädigungen auszutauschen oder für die Turbinenbeschaufelung einen anderen Werkstoff, wie beispielsweise einen keramischen Werkstoff als den Basiswerkstoff des Turbinenrades einzusetzen. Hierdurch erweitert sich der Einsatzbereich des erfindungsgemäßen Turbinenläufers.

Die aufgeführten Materialien, Zahlenangaben und Dimensionen sind beispielhaft zu verstehen und dienen lediglich der Erläuterung der Ausführungsformen und Weiterbildungen der vorliegenden Erfindung.

Der angegebene Turbinenläufer und der angegebene Turbolader sind besonders vorteilhaft im Kraftfahrzeugbereich und hier vorzugsweise bei Personenkraftfahrzeugen, beispielsweise bei Diesel- oder Ottomotoren, einsetzbar, lassen sich bei Bedarf allerdings auch bei beliebig anderen Turboladeranwendungen einsetzen.

## Patentansprüche

1. Turbinenläufer (1) für einen Turbolader, insbesondere für ein Kraftfahrzeug,
- mit einem einstückig ausgebildeten Turbinenrad (3), welches eine Turbinenbeschaufelung (4) und einen Turbinenradabsatz (5)mit einer ersten Stirnfläche aufweist, wobei die Turbinenbeschaufelung (4) und der Turbinenradabsatz (5) auf entgegen gesetzten Stirnflächen (16, 17) des Turbinenrades (3) angeordnet sind, und
- mit einer einstückig ausgebildeten Läuferwelle (2), welche eine Drehachse (9) und eine zweite Stirnfläche (7) aufweist,
- wobei die erste Stirnfläche (6) des Turbinenradabsatzes (5) mit der zweiten Stirnfläche (7) der Läuferwelle (2) durch rotationsreibverschweißen stoffschlüssig verbunden ist,
**dadurch gekennzeichnet, dass** der Turbinenradabsatz (5) massiv, ohne Hohlräume oder Vertiefungen ausgebildet ist und die zweite Stirnfläche (7) eine koaxial zur Drehachse (9) angeordnete Vertiefung (8) aufweist, die zur Aufnahme von plastifiziertem Material des Turbinenradabsatzes (5) und/oder der Läuferwelle (2) dient.

2. Turbinenläufer nach Anspruch 1, **dadurch gekennzeichnet, dass** der Turbinenradabsatz (5) als ein sich aus einer der Stirnflächen (16, 17) des Turbinenrades (3) erhebender, zu einer Drehachse (15) des Turbinenrades (3) rotationssymmetrischer Vorsprung ausgebildet ist.

3. Turbinenläufer nach Anspruch 1 oder 2, **dadurch gekennzeichnet, dass** die Läuferwelle (2) koaxial zu dem Turbinenradabsatz (5) ausgerichtet ist.

4. Turbinenläufer nach einem der vorhergehenden Ansprüche, **dadurch gekennzeichnet, dass** die Läuferwelle (2) aus einem legierten Edelstahl, insbesondere aus einem legierten Edelstahl mit den Hauptlegierungskomponenten Chrom, Molybdän und Vanadium, gefertigt ist.

5. Turbinenläufer nach einem der vorhergehenden Ansprüche, **dadurch gekennzeichnet, dass** das Turbinenrad (3) aus einer nickelbasierten Legierung, insbesondere aus einer nickelbasierten Legierung für Hochtemperaturanwendungen, gefertigt ist.

6. Turbinenläufer nach einem der vorhergehenden Ansprüche, **dadurch gekennzeichnet, dass** das Turbinenrad (3) ein im Metallguss hergestelltes Turbinenrad (3) ist, welches einen Anguss aufweist, der auf der ersten Stirnfläche (6) angeordnet ist.

7. Turbolader für ein Kraftfahrzeug, mit einem Turbinenläufer (1) gemäß zumindest einem der vorhergehenden Ansprüche,
wobei das Turbinenrad (3), in einem Turbinengehäuse angeordnet ist und
ein Verdichterrad in einem Verdichtergehäuse angeordnet ist und
die Läuferwelle (2) das Turbinenrad (3) mit dem Verdichterrad drehfest verbindet.

8. Verfahren zur Herstellung eines Turbinenläufers (1) gemäß zumindest einem der Ansprüche 1 bis 6 mit den nacheinander erfolgenden Schritten:
- Koaxiales Einspannen eines Turbinenrades, das einen massiv ausgebildeten Turbinenradabsatz mit einer ersten Stirnfläche und ohne Hohlräume oder Vertiefungen (5) aufweist, in eine Rotationsreibschweißvorrichtung
- Koaxiales Einspannen einer Läuferwelle (2), die eine zweite Stirnfläche (7) mit einer koaxial zur Drehachse (9) angeordnete Vertiefung (8) aufweist, in die Rotationsreibschweißvorrichtung;
- Rotieren der Läuferwelle (2);
- Aufpressen der zweiten Stirnfläche (7) der Läuferwelle (2) auf die erste Stirnfläche (6) des Turbinenradabsatzes (5); und
- Miteinander Rotationsreibverschweißen der mit ihren Stirnflächen (6, 7) aufeinander aufgepressten Läuferwelle (2) und Turbinenradabsatz (5).

## Claims

1. Turbine rotor (1) for a turbocharger, in particular for a motor vehicle,
- with a turbine wheel (3) which is formed in one piece and has turbine blading (4) and a turbine wheel shoulder (5) with a first end face, the turbine blading (4) and turbine wheel shoulder (5) being arranged on opposite end faces (16, 17) of the turbine wheel (3), and
- with a rotor shaft (2) which is formed in one piece and has an axis of rotation (9) and a second end face (7),
- the first end face (6) of the turbine wheel shoulder (5) being connected to the second end face (7) of the rotor shaft (2) in a materially integral way by means of rotary friction welding,
**characterized in that** the turbine wheel shoulder (5) is solidly formed, without cavities or depressions, and the second end face (7) has a depression (8) which is arranged coaxially to the axis of rotation (9) and which serves for the reception of plasticized material of the turbine wheel shoulder (5) and/or of the rotor shaft (2).

2. Turbine rotor according to Claim 1, **characterized in that** the turbine wheel shoulder (5) is formed as a projection which rises out of one of the end faces (16, 17) of the turbine wheel (3) and which is rotationally symmetrical with respect to an axis of rotation (15) of the turbine wheel (3).

3. Turbine rotor according to Claim 1 or 2, **characterized in that** the rotor shaft (2) is oriented coaxially to the turbine wheel shoulder (5).

4. Turbine rotor according to one of the preceding claims, **characterized in that** the rotor shaft (2) is manufactured from an alloyed high-grade steel, in particular from an alloyed high-grade steel with chromium, molybdenum and vanadium as the main alloying components.

5. Turbine rotor according to one of the preceding claims, **characterized in that** the turbine wheel (3) is manufactured from a nickel-based alloy, in particular from a nickel-based alloy for high-temperature applications.

6. Turbine rotor according to one of the preceding claims, **characterized in that** the turbine wheel (3) is a turbine wheel (3) which is produced as a metal casting and has a cast-on part which is arranged on the first end face (6).

7. Turbocharger for a motor vehicle, with a turbine rotor (1) according to at least one of the preceding claims,
the turbine wheel (3) being arranged in a turbine casing, and
a compressor wheel being arranged in a compressor casing, and
the rotor shaft (2) connecting the turbine wheel (3) to the compressor wheel fixedly in terms of rotation.

8. Method for producing a turbine rotor (1) according to at least one of Claims 1 to 6 with the following steps taking place in succession:
- coaxial clamping of a turbine wheel, which has a solidly formed turbine wheel shoulder with a first end face and without cavities or depressions (5), into a rotary friction welding device;
- coaxial clamping of a rotor shaft (2), which has a second end face (7) with a depression (8) arranged coaxially to the axis of rotation (9), into the rotary friction welding device;
- rotation of the rotor shaft (2);
- pressing of the second end face (7) of the rotor shaft (2) onto the first end face (6) of the turbine wheel shoulder (5); and
- rotary friction welding to one another of the rotor shaft (2) and turbine wheel shoulder (5) pressed with their end faces (6, 7) one onto the other.

## Revendications

1. Rotor de turbine (1) pour un turbocompresseur, plus particulièrement pour un véhicule automobile,
- avec une roue de turbine (3) réalisée d'une seule pièce, qui comprend un aubage de turbine (4) et un talon de roue de turbine (5) avec une première surface frontale, l'aubage de turbine (4) et le talon de roue de turbine (5) étant disposés sur des surfaces frontales opposées (16, 17) de la roue de turbine (3), et
- avec un arbre de rotor (2) réalisé d'une seule pièce, qui comprend un axe de rotation (9) et une deuxième surface frontale (7),
- la première surface frontale (6) du talon de roue de turbine (5) étant reliée à la deuxième surface frontale (7) de l'arbre de rotor (2) avec une liaison de matière soudée par friction en rotation,
**caractérisé en ce que** le talon de roue de turbine (5) est réalisé de manière massive, sans espaces vides ni creux, et la deuxième surface frontale (7) comprend un creux (8) disposé de manière coaxiale par rapport à l'axe de rotation (9), qui permet de loger un matériau plastifié du talon de roue de turbine (5) et/ou de l'arbre de rotor (2).

2. Rotor de turbine selon la revendication 1, **caractérisé en ce que** le talon de roue de turbine (5) est conçu comme une saillie à symétrie de rotation s'étendant à partir d'une des surfaces frontales (16, 17) de la roue de turbine (3) et symétrique en rotation à l'axe de rotation (15) de la roue de turbine (3).

3. Rotor de turbine selon la revendication 1 ou 2, **caractérisé en ce que** l'arbre de rotor (2) est aligné de manière coaxiale par rapport au talon de roue de turbine (5).

4. Rotor de turbine selon l'une des revendications précédentes, **caractérisé en ce que** l'arbre de rotor (2) est constitué d'un acier inoxydable allié, plus particulièrement d'un acier inoxydable allié avec les composants d'alliage principaux : chrome, molybdène et vanadium.

5. Rotor de turbine selon l'une des revendications précédentes, **caractérisé en ce que** la roue de turbine (3) est constituée d'un alliage à base de nickel, plus particulièrement d'un alliage à base de nickel pour des applications à haute température.

6. Rotor de turbine selon l'une des revendications précédentes, **caractérisé en ce que** la roue de turbine (3) est une roue de turbine (3) constituée d'une fonte métallique, qui présente une carotte disposée sur la première surface frontale (6).

7. Turbocompresseur pour un véhicule automobile avec un rotor de turbine (1), selon au moins une des revendications précédentes,
la roue de turbine (3) étant disposée dans un carter de turbine et
une roue de compresseur étant disposée dans un carter de compresseur et
l'arbre de rotor (2) reliant la roue de turbine (3) avec la roue de compresseur de manière solidaire en rotation.

8. Procédé de fabrication d'un rotor de turbine (1) selon au moins une des revendications 1 à 6, comprenant les étapes suivantes :
- serrage coaxial d'une roue de turbine, qui comprend un talon de roue de turbine réalisé de manière massive, avec une première surface frontale et sans espaces vides ni creux (5), dans un dispositif de soudure par friction en rotation
- serrage coaxial d'un arbre de rotor (2), qui comprend une deuxième surface frontale (7) avec un creux (8) disposée de manière coaxiale par rapport à l'axe de rotation (9), dans le dispositif de soudure par friction en rotation ;
- rotation de l'arbre de rotor (2) ;
- compression de la deuxième surface frontale (7) de l'arbre de rotor (2) contre la première surface frontale (6) du talon de roue de turbine (5) ;
- soudure par friction en rotation de l'arbre de rotor (2) et du talon de roue de turbine (5) comprimés l'un contre l'autre avec leurs surfaces frontales (6, 7).
